# EUROPEAN PATENT APPLICATION

(11) **EP 4 618 307 A1**
(43) Date of publication of application: **17.09.2025**
(21) Application number: 23889048.7
(22) Date of filing: 03.11.2023
(51) Int. Cl.: H01Q 1/00, H01Q 1/12

(54) **VIBRATION DAMPING APPARATUS FOR ANTENNA DEVICE**

(30) Priority: 07.11.2022 KR 20220146667
(71) Applicant: KMW Inc., Hwaseong-si, Gyeonggi-do 18462 (KR)
(72) Inventor: YOO, Chang Woo, Hwaseong-si Gyeonggi-do 18378 (KR); PARK, Dae-myung, Hwaseong-Si Gyeonggi-do 18462 (KR); HONG, Young Ji, Hwaseong-si Gyeonggi-do 18470 (KR); KIM, Hee, Osan-si Gyeonggi-do 18131 (KR); RYU, Jeoung Jun, Gyeonggi-do 13988 (KR); KIM, Dong Hee, Pyeongtaek-si Gyeonggi-do 17850 (KR)
(74) Representative: Impuls legal PartG mbB
(86) International application number: PCT/KR2023/017475
(87) International publication number: WO 2024/101786

(57) **Abstract**

A vibration damping apparatus for an antenna device is disclosed. According to one embodiment of the present disclosure, the provided vibration damping apparatus comprises: a first fixing member having a predetermined thickness, and having at least a portion recessed to form a first recessed area; a second fixing member, which has a predetermined thickness, can be coupled to the first fixing member, and has at least a portion recessed to form a second recessed area; and at least one elastic member disposed between the first fixing member and the second fixing member.

## Description

### Technical Field

The present disclosure relates to a vibration damping apparatus for an antenna device. More particularly, it relates to a vibration damping apparatus for an antenna device for seismic design of an antenna structure.

### Background Art

The description described in this part merely provides background information for the present disclosure, but does not constitute the related art.

An antenna for wireless communication is often installed on a rooftop of a building or the like in order to improve the quality of wireless signal transmission and reception. In this case, the antenna structure is directly exposed to climate and weather, and thus measures are taken to protect the antenna structure from various external factors.

Meanwhile, in recent years, abnormal weather due to global warming and the like has become more frequent around the world, and natural disasters such as earthquakes and typhoons not only cause casualties but also have a significant impact on the performance of various information and communication facilities.

On the roof of a building or the like, the antenna device is installed and fixed on a rigid support fixture, and various reinforcing structures are additionally installed to protect the antenna structure from the above-described external factors. In particular, vibrations caused by earthquakes, typhoons, and the like cause a decrease in the transmission/reception quality of wireless signals and the lifetime of the antenna device, and thus a solution for damping such vibrations is required.

However, most antenna structures use a method of increasing the rigidity of the structure itself or adding a separate heavy reinforcing structure for vibration damping, which causes a problem in that the weight of the entire structure is excessively increased and the cost is also increased.

### Detailed Description of the Invention

### Technical Problem

Accordingly, the present disclosure is intended to solve these problems, and has a main object to provide a vibration damping apparatus for an antenna device, which may improve the anti-seismic performance of an antenna structure without excessive weight increase.

### Technical Solution

According to one embodiment of the present disclosure to achieve this objective, there is provided a vibration damping apparatus, including: a first fixing member having a predetermined thickness and having at least portion recessed to form a first recessed area; a second fixing member which has a predetermined thickness, coupled to the first fixing member, and has at least a portion recessed to form a second recessed area; and at least one elastic member disposed between the first fixing member and the second fixing member.

Further, there is provided an antenna device including at least one vibration damping apparatus, the antenna device includes a support fixture coupled to a side of the at least one vibration damping apparatus; and an antenna module coupled to the other side of the at least one vibration damping apparatus.

### Effects of the Invention

As described above, according to the present embodiment, there is an effect that the anti-seismic performance of an antenna structure may be improved without an excessive increase in weight.

### Brief Description of the Drawings

FIG. 1 is a coupling diagram of a vibration damping apparatus according to an embodiment of the present disclosure.
FIG. 2 is an exploded perspective view of a vibration damping apparatus according to an embodiment of the present disclosure.
FIG. 3 is a top view of a vibration damping apparatus according to an embodiment of the present disclosure.
FIG. 4 is a diagram illustrating a part of an antenna device according to an embodiment of the present disclosure.

### Detailed Description of Exemplary Embodiments

Hereinafter, some embodiments of the present disclosure will be described in detail with reference to exemplary drawings. Note that when components in each drawing are denoted by reference numerals, the same components are denoted by the same numerals as much as possible even if they are denoted on different drawings. In addition, in describing the present disclosure, if it is determined that a specific description of a related known configuration or function may obscure the gist of the present disclosure, the detailed description thereof will be omitted.

In describing components of embodiments of the present disclosure, reference numerals such as first, second, i), ii), a), and b) may be used. These symbols are only used to distinguish the components from other components, and the nature, sequence, order, or the like of the components is not limited by the symbols. In the specification, when a part "includes" or "comprises" an element, unless there is an explicit description to the contrary, the part may further include other elements rather than excluding the other elements.

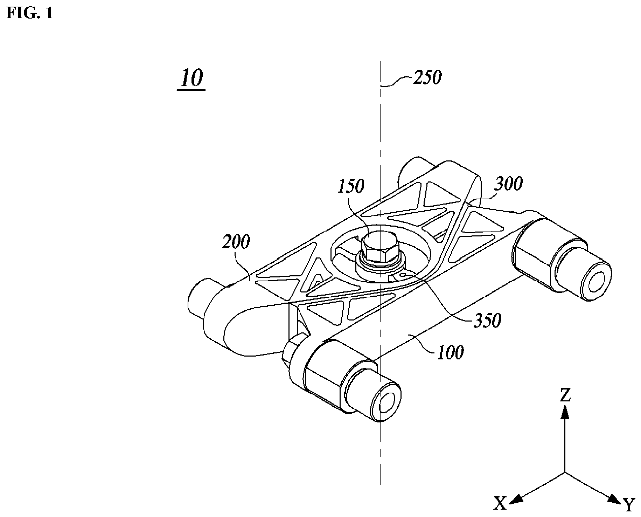

FIG. 1 is a coupling diagram of a vibration damping apparatus according to an embodiment of the present disclosure.

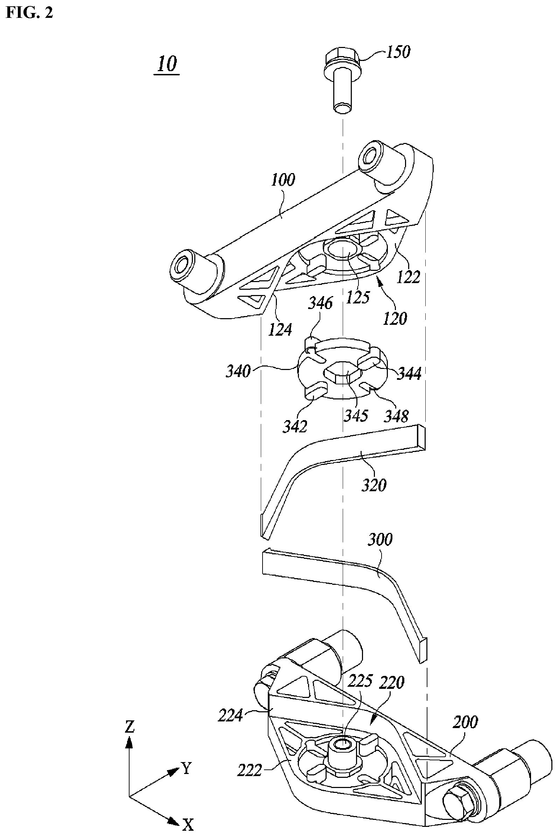

FIG. 2 is an exploded perspective view of a vibration damping apparatus according to an embodiment of the present disclosure.

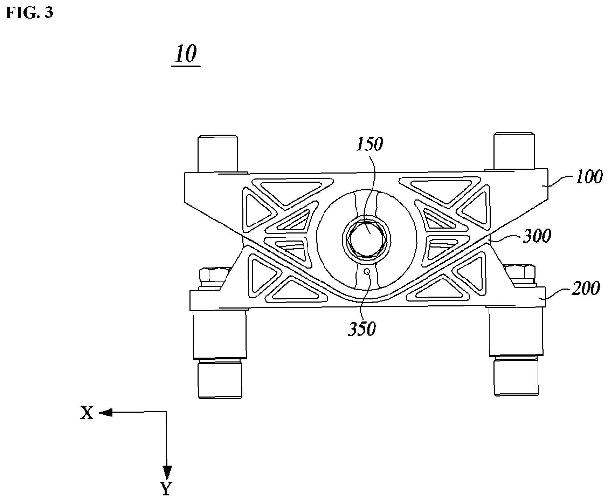

FIG. 3 is a top view of a vibration damping apparatus according to an embodiment of the present disclosure.

Referring to FIG. 1 to FIG. 3, a vibration damping apparatus 10 according to an embodiment of the present disclosure includes all or a part of a first fixing member 100, a second fixing member 200, and at least one elastic member 300, 320, 340.

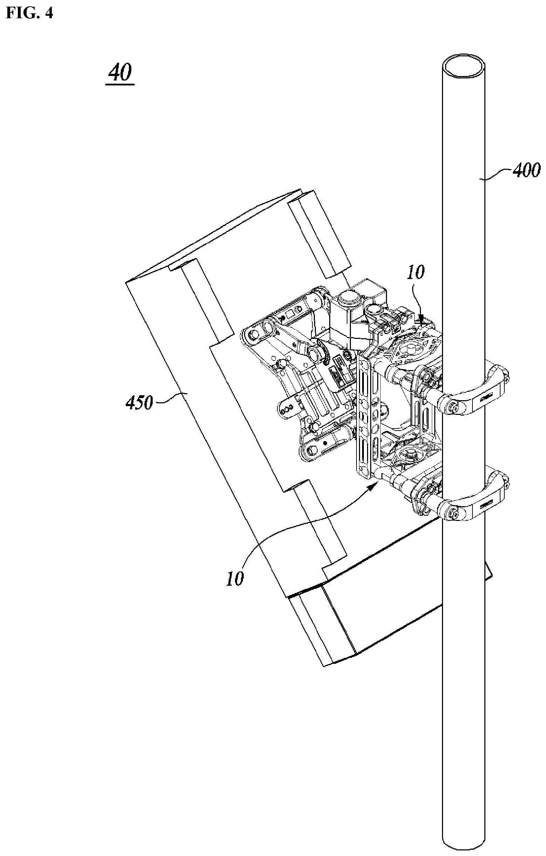

The first fixing member 100 may include a first fixing member having a predetermined thickness and having at least portion recessed to form a first recessed area 120. Here, the predetermined thickness may mean a thickness sufficient to withstand a load of an antenna module (450 in FIG. 4) to be described later.

The second fixing member 200 has a predetermined thickness, may be coupled to the first fixing member, and has at least a portion recessed to form a second recessed area 220. Here, the thickness of the second fixing member 200 is preferably configured to be the same as the thickness of the first fixing member 100, but is not necessarily limited thereto.

In FIG. 2, the first recessed area 120 and the second recessed area 220 are recessed to form a rhombus shape in cross section, but are not necessarily limited to such a shape. Further, the first recessed area 120 and the second recessed area 220 are preferably configured to have the same shape, but are not necessarily limited thereto.

The first recessed area 120 may include a first recessed floor surface 122 formed at one end in the recessed direction. For example, the direction in which the first recessed area 120 is recessed may be, but is not necessarily limited to, a direction parallel to the Z axis in FIGS. 1 and 2.

Further, the second recessed area 220 may include a second recessed floor surface 222 formed at one end in the recessed direction. For example, the direction in which the second recessed area 220 is recessed may be, but is not necessarily limited to, a direction parallel to the Z axis in FIGS. 1 and 2.

The first fixing member 100 and the second fixing member 200 may be coupled such that the first recessed floor surface 122 and the second recessed floor surface 222 face each other. For example, the second recessed floor surface 222 of the second fixing member 200 may be coupled to the upper portion of the first recessed floor surface 122 of the first fixing member 100 so as to face each other, and in this case, at least a part of the second fixing members 200 may be coupled in such a manner as to cover at least a portion of the first fixing members 100.

However, the second recessed floor surface 222 does not necessarily have to be coupled to the upper portion of the first recessed floor surface 122 to face each other, and conversely, the first recessed floor surface 122 may be coupled to the top portion of the second recessed floor surface 222 to face each other.

The vibration damping apparatus 10 according to an embodiment of the present disclosure may have a multilayer structure in which at least a part of one of the first fixing member 100 and the second fixing member 200 is configured to cover at least a part thereof. Therefore, in supporting an antenna module 450 to be described later, the vibration damping apparatus 10 may prevent the antenna module 450 from sagging due to a vertical load of the antenna module 450 itself or a vertical force caused by an earthquake.

The at least one elastic member 300, 320, 340 may be disposed between the first fixing member 100 and the second fixing member 200. More specifically, the at least one elastic member 300, 320, 340 may be disposed in the first recessed area 120 and the second recessed area 220.

In FIG. 2, the at least one elastic member 300, 320, and 340 is composed of three elastic members, but is not necessarily limited to three elastic members, and may be composed of one or more elastic members.

Therefore, in the vibration damping apparatus 10 according to an embodiment of the present disclosure, the antenna module 450 may be supported, and at the same time, the at least one elastic member 300, 320, 340 may serve as a damper, so that a separate reinforcing structure for seismic design of the antenna device may not be required.

Meanwhile, the first fixing member 100 and the second fixing member 200 may be coupled by screws 150. In this case, the screw 150 may pass through the centers of the first recessed floor surface 122 and the second recessed floor surface 222, so that the first fixing member 100 and the second fixing member 200 may be engaged.

Referring back to FIG. 2, the first fixing member 100 may include a first opening 125 penetrating the first recessed floor surface 122 in a direction parallel to the Z-axis direction, and the second fixing member 200 may include a coupling hole 225 closed on one side and extending in a direction parallel with the Z-axis.

Here, at least a part of the coupling hole 225 may be inserted into and fixed to the inside of the first opening 125, and the screw 150 may be coupled to the coupling hole 225 to couple the first fixing member 100 and the second fixing member 200.

However, the first opening 125 and the coupling hole 225 do not necessarily have to be included in the first fixing member 100 and the second fixing member 200, respectively, and it is also possible that the first fixing member 110 includes the coupling hole 225 and the second fixing members 200 include the first opening 125.

Meanwhile, the first fixing member 100 may be symmetrically formed with respect to a first reference surface (not shown) perpendicular to the first recessed floor surface 122, and the second fixing member 200 may be symmetrical with respect to a second reference surface (not shown) perpendicular to the second recessed floor surface 222.

The first reference surface and the second reference surface are not shown in the drawings, but when referring to FIGS. 1 and 2, a surface parallel to the YZ plane and passing through the center of the first recessed floor surface 122 may be the first reference surface, and a surface parallel to a YZ plane and crossing the center of the second recessed floor surface 222 may be the second reference surface.

The first reference surface and the second reference surface may be the same, wherein the at least one elastic member 300, 320, 340 may be configured to provide a restoring force to the first fixing member 100 and the second fixing member 200 upon a torque action about a central axis 250 perpendicular to the first recessed floor surface 122 and included in the first reference surface.

That is, the vibration damping apparatus 10 according to an embodiment of the present disclosure may be restored to the original state even when rotational torque due to an earthquake or the like is applied, so that efficient seismic design of the antenna device may be enabled.

The manner in which the at least one elastic member 300, 320, 340 provides the restoring force will be described later.

The first recessed area 120 may include a first recessed wall 124 formed in a direction protruding from the first recessed floor surface 122. In this case, the first recessed wall 124 may be perpendicular to the first recessed floor surface 122, but is not necessarily limited thereto.

The second recessed area 220 may include a second recessed wall 224 formed in a direction protruding from the second recessed floor surface 222. In this case, the second recessed wall 224 may be perpendicular to the second recessed floor surface 222, but is not necessarily limited thereto.

Further, the at least one elastic member 300, 320, 340 may include a first elastic member 300 and a second elastic member 320.

In this case, the first elastic member 300 may have a shape corresponding to the first recessed wall 124 and may be disposed to be in contact with at least a part of the second fixing member 200 and the first recessed wall 124. The second elastic member 320 may have a shape corresponding to the second recessed wall 224 and may be disposed to be in contact with at least a portion of the first fixing member 100 and the second recessed wall 224.

Accordingly, the first elastic member 300 may provide a restoring force to the first fixing member 100 and the second fixing member 200 by being compressed or tensioned between the first recessed wall 124 and at least a portion of the second fixing member 200, and the second elastic member 320 may provide a restoring force to the first fixing member 100 and the second fixing members 200 by being compressed and tensioned between the second recessed wall 224 and at least a part of the first fixing member 200.

Since both the first elastic member 300 and the second elastic member 320 may provide a restoring force to the first fixing member 100 and the second fixing member 200, a more effective anti-seismic design may be possible. However, at least one of the elastic members 300, 320, 340 does not necessarily include the first elastic member 300 and the second elastic member 320, and may include only one of the first elastic member 300 and the second elastic members 320.

On the other hand, the first recessed wall 124 may have a concave or convex shape centered relative to the first reference surface, and the second recessed wall 224 may have a convex or concave shape centered relative to the second reference surface. When the first reference surface and the second reference surface are the same, the first recessed wall 124 and the second recessed wall 224 may be formed symmetrically about the same reference surface.

In this case, the first elastic member 300 and the second elastic member 320 may also be symmetrically formed about the same reference surface. For example, the first elastic member 300 and the second elastic member 320 may also be configured to be concave or convex about the same reference surface. Therefore, the first elastic member 300 and the second elastic member 320 may efficiently provide a restoring force to the first fixing member 100 and the second fixing member 200 when a rotational torque is applied about the central axis 250.

However, the first recessed wall 124 and the first elastic member 300 do not necessarily have to have a concave or convex shape centered relative to the first reference surface, and there is no limitation on the shape as long as the restoring force may be provided to the first fixing member 100 and the second fixing member 200 during the rotational torque action about the central axis 250. The same applies to the second recessed wall 224 and the second elastic member 320.

The at least one elastic member 300, 320, 340 may include a third elastic member 340 disposed between the first recessed area 120 and the second recessed area 220. More particularly, for example, the at least one elastic member 300, 320, 340 may be disposed between the first recessed floor surface 122 and the second recessed floor surface 222.

In addition, the third elastic member 340 may include at least one protruding portion 342, 344, 346, 348 protruding from one surface of the third elastic member 330.

Like the first elastic member 300 and the second elastic member 320, the third elastic member 340 may also serve to provide a restoring force to the first fixing member 100 and the second fixing member 200.

Further, the third elastic member 340 may include a second opening 345 penetrating the third elastic member 340 in a direction parallel to the Z-axis direction for screwing the first fixing member 100 and the second fixing member 200. In this case, the center of the second opening 345 is preferably configured to coincide with the center of the first opening 125.

On the other hand, in FIG. 2, before the first fixing member 100 and the second fixing member 200 are coupled, the at least one elastic member 300, 320, 340 is configured to be formed in a separate configuration, but is not necessarily limited thereto.

For example, the first fixing member 100 and/or the second fixing member 200 may include a penetration injection hole 350 formed on at least one surface, and the at least one elastic member 300, 320, 340 may be formed by using a liquid injected through the penetration injection hole 350.

In this case, the at least one elastic member 300, 320, 340 may be formed by curing the liquid phase injected into the space between the first fixing member 100 and the second fixing member 200 after the first fixing member 100 and the second fixing member 200 are coupled.

Hereinafter, a restoring force providing manner of the first elastic member 300 will be described with reference to FIGS. 1 and 3. The restoring force providing manner of the first elastic member 300, which will be described later, may be similarly applied to the case of the second elastic member 320.

When a rotational torque about the central axis 250 acts on the vibration damping apparatus 10 according to an embodiment of the present disclosure, one side of the first elastic member 300 may be compressed and the other side may be tensioned with respect to the central axis 250. For example, in FIG. 3, one end in the positive X-axis direction of the first elastic member 300 may be compressed, and one end in the negative X-axis direction thereof may be tensioned.

Accordingly, a restoring force for returning the first elastic member 300 to the original shape may be generated, which is a torque in a direction opposite to the rotational torque applied to the vibration damping apparatus 10 according to an embodiment of the present disclosure. The restoring force is transmitted to the first fixing member 100 and the second fixing member 200, so that the vibration damping apparatus 10 according to an embodiment of the present disclosure may maintain its original shape and effectively damp external vibration.

Although not illustrated in the drawings, the third elastic member 340 may also provide a restoring force to the first fixing member 100 and the second fixing member 200 as a torque in a direction opposite to a rotational torque applied to the vibration damping apparatus 10 according to an embodiment of the present disclosure.

Referring back to FIG. 2, the third elastic member 340 may have a disc shape. Further, for example, the at least one protruding portion 342, 344, 346, 348 may include at least one vertical protruding portion 342, 344 and/or at least one horizontal protruding portion 346, 344.

In this case, the at least one vertical protruding portion 342, 344 may be configured to protrude in the thickness direction from the upper surface or the lower surface of the disk-shaped third elastic member 340, and the at least one horizontal protruding portion 346, 348 may be configured to project in a direction perpendicular to the thickness direction from one side surface of the disk-shaped third elastic member 340.

On the other hand, as shown in FIG. 2, the at least one vertical protruding portion 342, 344 and the at least one horizontal protruding portion 346, 348 are respectively configured as two protruding portions, and the four protruding portions may be arranged at intervals of 90 degrees, but the number and intervals of the protruding portions are not necessarily limited thereto.

When a rotational torque about the central axis 250 acts on the vibration damping apparatus 10 according to an embodiment of the present disclosure, the third elastic member 340 may provide a restoring force to the first fixing member 100 and the second fixing member 200 by the at least one protruding portion 342, 344, 346, 348.

FIG. 4 is a diagram illustrating a part of an antenna device according to an embodiment of the present disclosure.

Referring to FIG. 4, an antenna device 40 according to an embodiment of the present disclosure may include all or a part of a support fixture 400, an antenna module 450, and at least one vibration damping apparatus 10.

Here, the support fixture 400 may be coupled to one side of the at least one vibration damping apparatus 10, and the antenna module 450 may be coupled to the other side. Therefore, the antenna module 450 may be coupled to the support 400 by the at least one vibration damping apparatus 10, so that the antenna device 40 according to an embodiment of the present disclosure may also have a vibration resistance function as described above.

In addition, the antenna device 40 according to an embodiment of the present disclosure may include two vibration damping apparatuses 10, and the two vibration damping apparatuses 10 may be disposed at the top and the bottom of the antenna module 450. In this case, the two vibration damping apparatuses 10 may be disposed so that the same surface faces each other in a direction parallel to the height direction of the support fixture 400.

That is, the two vibration damping apparatuss 10 may be disposed in a form in which one vibration damping apparatus is inverted upside down from the other vibration damping apparatus, thereby ensuring strong support and durability.

The foregoing descriptions are merely illustrative of the technical concept of the present embodiment, and various modifications and variations may be made by those skilled in the art without departing from the essential characteristics of the present embodiment. Therefore, the present embodiments are not intended to limit the technical concept of the present embodiments, but are intended to be illustrative, and the scope of the technical concept of this embodiment is not limited by these embodiments. The protection scope of the present embodiment is to be construed according to the following claims, and all technical ideas within the scope equivalent thereto are construed as being included in the scope of rights of the present embodiment.

### [Description of Symbols]

10 vibration damping apparatus, 40 antenna device, 100 first fixing member, 120 first recessed area, 122 first recessed floor surface, 124 first recessed wall, 125 first opening, 150 screw, 200 second fixing member, 220 second recessed area, 222 second recessed floor surface, 224 second recessed wall, 225 coupling hole, 250 central axis, 300 first elastic member, 320 second elastic member, 340 third elastic member, 342, 344 vertical protruding portion, 345 second opening, 346, 348 horizontal protruding portion, 350 penetration injection hole, 400 support fixture, 450 antenna module

### [CROSS-REFERENCE TO RELATED APPLICATION]

This application claims priority to Korean Patent Application No. 10-2022-0146667, filed on November 7, 2022, which is incorporated herein by reference in its entirety.

## Claims

1. A vibration damping apparatus, comprising:
a first fixing member having a predetermined thickness and having at least portion recessed to form a first recessed area;
a second fixing member which has a predetermined thickness, coupled to the first fixing member, and has at least a portion recessed to form a second recessed area; and
at least one elastic member disposed between the first fixing member and the second fixing member.

2. The vibration damping apparatus of claim 1,
wherein the first recessed area comprises a first recessed floor surface formed at one end in a recessing direction,
the second recessed area comprises a second recessed floor surface formed at one end in a recessing direction, and
the first fixing member and the second fixing member are coupled such that the first recessed floor surface and the second recessed floor surface face each other.

3. The vibration damping apparatus of claim 1,
wherein the at least one elastic member is disposed in the first recessed area and the second recessed area.

4. The vibration damping apparatus of claim 2,
wherein the first fixing member is symmetrically formed with respect to a first reference surface perpendicular to the first recessed floor surface, and
the second fixing member is symmetrically formed with respect to a second reference surface perpendicular to the second recessed floor surface.

5. The vibration damping apparatus of claim 4,
wherein the first reference surface and the second reference surface are the same; and
the at least one elastic member is configured to provide a restoring force to the first fixing member and the second fixing member when a torque is applied about a central axis perpendicular to the first recessed floor surface and included in the first reference surface.

6. The vibration damping apparatus of claim 4,
wherein the first recessed area comprises a first recessed wall formed in a direction protruding from the first recessed floor surface, and
the at least one elastic member comprises a first elastic member that has a shape corresponding to the first recessed wall and is disposed to be in contact with at least a part of the second fixing member and the first recessed wall.

7. The vibration damping apparatus of claim 6,
wherein the second recessed area comprises a second recessed wall formed in a direction protruding from the second recessed floor surface, and
the at least one elastic member further comprises a second elastic member that has a shape corresponding to the second recessed wall and is disposed to be in contact with at least a part of the first fixing member and the second recessed wall.

8. The vibration damping apparatus of claim 7,
wherein the first recessed wall has a concave or convex shape centered relative to the first reference surface, and
the second recessed wall has a concave or convex shape centered relative to the second reference surface.

9. The vibration damping apparatus of claim 1,
wherein the at least one elastic member comprises a third elastic member disposed between the first recessed area and the second recessed area, and
the third elastic member comprises at least one protruding portion protruding from one surface of the third elastic member.

10. The vibration damping apparatus of claim 9,
wherein the third elastic member has a disc shape, and
the at least one protruding portion comprises:
at least one vertical protruding portion configured to protrude in a thickness direction from an upper surface or a lower surface of the third elastic member; and/or
at least one horizontal protruding portion configured to protrude in a direction perpendicular to the thickness direction from one side surface of the third elastic member.

11. The vibration damping apparatus of claim 1,
wherein the first fixing member and/or the second fixing member comprises a penetration injection hole formed through at least one surface, and
the at least one elastic member is formed by using a liquid phase injected through the penetration injection hole.

12. The vibration damping apparatus of claim 1,
wherein the first fixing member and the second fixing member are coupled by a screw passing through centers of the first recessed area and the second recessed area.

13. An antenna device comprising at least one vibration damping apparatus according to claim 1, the antenna device comprising:
a support fixture coupled to a side of the at least one vibration damping apparatus; and
an antenna module coupled to the other side of the at least one vibration damping apparatus.

14. The antenna device of claim 13,
wherein the at least one vibration damping apparatus includes two vibration damping apparatus disposed above and below the antenna module, and
the two vibration damping apparatuses are arranged so that the same surfaces face each other in a direction parallel to a height direction of the support fixture.
